(19) Europäisches Patentamt
European Patent Office
Office européen des brevets

(11) **EP 3 336 055 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
***C01B 3/38*** *(2006.01)* ***B01J 8/06*** *(2006.01)*

(21) Anmeldenummer: **16400061.4**

(22) Anmeldetag: **19.12.2016**

(54) **KORROSIONSGESCHÜTZTES REFORMERROHR MIT INTERNEM WÄRMEAUSTAUSCH**

CORROSION PROTECTED REFORMER TUBE WITH INTERNAL HEAT EXCHANGER

TUBE DE REFORMAGE PROTÉGÉ CONTRE LA CORROSION COMPRENANT UN ÉCHANGEUR THERMIQUE INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.06.2018 Patentblatt 2018/25**

(73) Patentinhaber: **L'AIR LIQUIDE, SOCIÉTÉ ANONYME POUR L'ÉTUDE ET L'EXPLOITATION DES PROCÉDÉS GEORGES CLAUDE**
**75007 Paris (FR)**

(72) Erfinder:
• **Ulber, Dieter**
  **61449 Steinbach (DE)**
• **Doublet, Sébastien**
  **91430 Vauhallan (FR)**
• **Del Gallo, Pascal**
  **91410 Dourdan (FR)**
• **Prost, Laurent**
  **91190 Gif sur Yvette (FR)**

(74) Vertreter: **Dropsch, Holger**
**Air Liquide Forschung und Entwicklung GmbH**
**Gwinnerstraße 27-33**
**60388 Frankfurt am Main (DE)**

(56) Entgegenhaltungen:
**EP-A1- 1 193 219    WO-A1-2013/068416**

**Beschreibung**

**Gebiet der Erfindung**

Die Erfindung betrifft ein Reformerrohr zur Umwandlung kohlenwasserstoffhaltiger Einsatzstoffe, vorzugsweise Erdgas und leichte flüssige Kohlenwasserstoffe wie Naphtha, in ein Kohlenoxide und Wasserstoff enthaltendes Synthesegasprodukt. Das erfindungsgemäße Reformerrohr ermöglicht einen internen Wärmeaustausch zwischen dem Einsatzgas und dem zu Synthesegasprodukten teilumgesetzten Produktgas, wodurch sich Vorteile hinsichtlich des Energieverbrauchs bei der Herstellung von Synthesegas und der Wertprodukte Wasserstoff und Kohlenmonoxid ergeben. Es ist ferner mit einer Korrosionsschutzschicht ausgestattet, die die sog. Metal-Dusting-Korrosion wirkungsvoll verhindern soll.

Die Erfindung betrifft ferner ein Verfahren zur Herstellung von Synthesegas durch Dampfreformierung kohlenwasserstoffhaltiger Einsatzstoffe unter Verwendung des erfindungsgemäßen Reformerrohres, sowie einen mit dem Reformerrohr ausgestatteten Reformerofen.

**Stand der Technik**

Kohlenwasserstoffe können mit Dampf katalytisch zu Synthesegas, also Mischungen von Wasserstoff ($H_2$) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung von den heißen Rauchgasen.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind.

Die Dampfreformierung von Erdgas zeichnet sich durch ihren hohen Energiebedarf aus. Im Stand der Technik finden sich daher bereits Vorschläge, bei denen durch optimierte Verfahrensgestaltung, beispielsweise durch Energierückgewinnung, versucht werden soll, den Bedarf an Fremdenergie zu minimieren. So wurde von Higman bei der EUROGAS-90-Konferenz, Trondheim, Juni 1990, veröffentlicht auch unter http://www.higman.de/gasification/papers/eurogas.pdf (Abruf am 27.09.2011), ein sogenanntes HCT-Reformerrohr mit internem Wärmeaustausch vorgestellt. Dieses umfasst ein äußeres, mit Katalysator gefülltes und von außen beheiztes Reformerrohr, bei dem das Katalysatorbett von dem Einsatzgas von oben nach unten durchströmt wird. Im Inneren des Katalysatorbettes befinden sich zwei gewendelte, als Doppelhelix angeordnete Wärmetauscherrohre aus einem geeigneten Material, durch die das teilreformierte Gas nach Verlassen des Katalysatorbettes strömt und dabei einen Teil seiner fühlbaren Wärme an den am Katalysator ablaufenden Dampfreformierungsprozess abgibt. Nachteilig ist hierbei allerdings der höhere Druckverlust aufgrund der längeren Leitungsstrecke des Gases durch die wendeiförmig ausgestalteten Wärmetauscherrohre. Ferner macht sich eine als "Metal Dusting" bezeichnete Korrosion stärker bemerkbar, die nachfolgend erläutert wird, da längere Abschnitte der Wärmetauscherrohre dem für die Metal-Dusting-Korrosion relevanten Temperaturbereich ausgesetzt sind.

Bei hohen Temperaturen neigen CO und Kohlenwasserstoffe dazu, auf Metall zu dissoziieren und hierdurch Kohlenstoff auf der Metalloberfläche abzulagern. Der Kohlenstoff wird dann an die feste Phase überführt und extrahiert die anfälligen Metalle aus ihrer homogenen festen Matrix, wodurch es zu Lochfraß und schließlich zum mechanischen Zusammenbruch der Materialien kommt. Dies führt zu hohen Wartungskosten und kann ernsthafte Sicherheitsprobleme verursachen, beispielsweise durch Bersten drucktragender Leitungen und Apparate und/oder den Austritt giftigen Kohlenmonoxids.

Wie in dem Fachaufsatz " Metal Dusting Protective Coatings. A Literature Review", A. Agüero et al., Oxid Met (2011) 76:23-42, gelehrt wird, ist Metal Dusting eine Art korrosiver Desintegration von Metallen und Legierungen in feine Partikel. Materialien, die anfällig für diese Form des Korrosionsangriffs sind, sind insbesondere Eisen, Nickel, Cobalt und ihre Legierungen. Metal Dusting tritt bei hohen Temperaturen von etwa 400 bis 800 °C und in Gasatmosphären auf, die insbesondere Kohlenmonoxid (CO) oder Kohlenwasserstoffe enthalten. Unter den technisch üblichen Bedingungen bei der Dampfreformierung ist unter 400 °C zwar das thermodynamische Potenzial für die Metal-Dusting-Reaktion hoch, aber ihre Reaktionsgeschwindigkeit niedrig. Über 800 °C ist das thermodynamische Potenzial für Metal Dusting so niedrig, dass es nicht in nennenswertem Ausmaß auftritt. Deswegen wird Metal Dusting häufig in Dampfreformierungsverfahren beobachtet, wobei alle Anfagenteile, insbesondere Ausrüstungsteile der Abhitzestrecke betroffen sind, die mit dem erzeugten Synthesegas im genannten Temperaturbereich in Berührung kommen.

Der Vorläufer für Metal Dusting ist die Bildung elementaren Kohlenstoffs aus C-Quellen wie CO und $CH_4$. Die Hauptreaktionen für die C-Bildung aus CO und Methan ergeben sich aus den folgenden Reaktionsgleichungen:

$$(1a) \qquad 2\,CO = C + CO_2$$

$$(2a) \qquad CO + H_2 = C + H_2O$$

$$(3a) \qquad CH_4 = C + 2\,H_2$$

Das thermodynamische Potential für die obigen Reaktionen, nach rechts zu verlaufen, d. h. für die Kohlenstoffbildung, wird durch die sogenannte Kohlenstoffaktivität $a_C$ dargestellt, die für diese drei Reaktionen berechnet wird als:

$$(1b) \qquad a_{C1} = K_{p1}\,(p_{CO})^2\,/\,p_{CO2}$$

$$(2b) \qquad a_{C2} = K_{p2}\,p_{CO}\,p_{H2}\,/\,p_{H2O}$$

$$(3b) \qquad a_{C3} = K_{p3}\,p_{CH4}\,/\,(p_{H2})^2$$

wobei $K_{pi}$ die Gleichgewichtskonstante der entsprechenden Reaktion ist und $p_i$ der Partialdruck des entsprechenden Gases ist. Wenn die Aktivität $a_C$ größer als 1 ist, hat Kohlenstoff ein thermodynamisches Potential, sich über die entsprechende Reaktion zu bilden, obwohl das Ausmaß der Kohlenstoffbildung durch die Kinetik der Reaktion begrenzt werden kann. Wenn $a_C$ kleiner als eins ist, findet gemäß der Thermodynamik keine Graphitbildung statt. Aus den obigen Gleichungen ergibt sich, dass $a_C$ eine Funktion der Temperatur und der Partialdrücke der beteiligten Gase ist. Mit anderen Worten, $a_C$ ist eine Funktion der Temperatur, der Gaszusammensetzungen und in einigen Fällen des absoluten Drucks des Gasgemisches.

Mehrere Mechanismen wurden für Metal Dusting von Fe- und Ni-basierten Materialien in der Literatur vorgeschlagen. Manche von ihnen gehen davon aus, dass sich intermediär Metallcarbide bilden, die sich nachfolgend in Kohlenstoff- und Metallstaub zersetzen. Für Einzelheiten wird auf die Literatur, z. B. den oben genannten Fachaufsatz, verwiesen.

Das Auftreten von Metal Dusting kann durch das Anbringen einer korrosionshemmenden Beschichtung auf der Legierungsoberfläche verlangsamt oder sogar verhindert werden. Dabei kommen üblicherweise entweder Diffusionsbeschichtungen oder Überzüge bzw. Deckschichten zum Einsatz, die auf der auf der Bildung einer dünnen, stabilen, schützenden und haftenden Schicht, basierend auf den Elementen Aluminium, Chrom oder Silicium basieren. Derzeit werden am häufigsten Aluminium-Diffusionsbeschichtungen für den Oxidations- und Korrosionsschutz in der chemischen Industrie bei hohen Temperaturen eingesetzt. Sie werden gebildet, wenn eine Legierung mit einem Metall oder einer Metallmischung bei einer Temperatur beschichtet wird, die hoch genug ist, um eine Eindiffusion des oder der Metalle in die Oberfläche des Substrats zu ermöglichen. Daraus ergibt sich eine metallurgische Bindung mit dem Substratmaterial und die Beschichtung wird dann zu einem integralen Bestandteil des Substratmaterials. Als Nachteile ergeben sich hierbei der hohe Herstellungsaufwand und die begrenzte Lebensdauer von Diffusionsbeschichtungen, beispielsweise durch Verflüchtigung des Schutzmetalls durch Verdampfen, seine Abrasion durch Feststoffpartikel im Edukt- oder Produktgasstrom oder auch durch verstärkte und tiefere Eindiffusion des Schutzmetalles, beispielsweise Aluminium, in das Volumen des zu schützenden Werkstückes. Durch diesen Diffusionsvorgang verringert sich die Oberflächenkonzentration des Schutzmetalles und ein wirkungsvoller Korrosionsschutz ist somit nicht mehr gegeben.

## Beschreibung der Erfindung

Die Aufgabe der vorliegenden Erfindung besteht daher darin, ein Reformerrohr anzugeben, das günstige Eigenschaften bezüglich der Energierückgewinnung mittels internem Wärmeaustausch aufweist, bei dem aber gleichzeitig die Korrosionsanfälligkeit für die Metal-Dusting-Korrosion minimiert ist.
Diese Aufgabe wird durch ein Reformerrohr mit den Merkmalen des Anspruchs 1 gelöst. Weitere Ausgestaltungen des Reformerrohrs nach der Erfindung ergeben sich aus den Unteransprüchen.

Erfindungsgemäßes Reformerrohr:

Reformerrohr zur Umwandlung kohlenwasserstoffhaltiger Einsatzstoffe, vorzugsweise Erdgas, in ein Kohlenoxide und Wasserstoff enthaltendes Synthesegasprodukt unter Dampfreformierungsbedingungen, umfassend

(a) ein äußeres, drucktragendes Mantelrohr, wobei das Mantelrohr mittels eines Trennbodens in eine Reaktionskammer und eine Austrittskammer unterteilt wird und wobei die Reaktionskammer von außen beheizbar ist,
(b) eine in der Reaktionskammer angeordnete Schüttung eines für die Dampfreformierung aktiven, festen Katalysators,
(c) einen im Bereich der Reaktionskammer angeordneten Eintritt für den den Einsatzstoff enthaltenden Einsatzgasstrom, wobei der Eintritt des Einsatzgasstroms in Fluidverbindung mit der Katalysatorschüttung steht,
(d) mindestens ein innerhalb der Reaktionskammer und innerhalb der Katalysatorschüttung angeordnetes Wärmetauscherrohr, dessen Eintrittsende in Fluidverbindung mit der Katalysatorschüttung steht und dessen Austrittsende in Fluidverbindung mit der Austrittskammer steht, wobei der Einsatzgasstrom nach Eintritt in die Reaktionskammer zunächst die Katalysatorschüttung und nachfolgend im Gegenstrom das Wärmetauscherrohr durchströmt und sich dabei kontinuierlich abkühlt und wobei das Wärmetauscherrohr in einer Wärmeaustauschbeziehung mit der Katalysatorschüttung und dem durch sie strömenden Einsatzgasstrom steht,
(e) eine Sammelleitung für das Synthesegasprodukt, die mit der Austrittskammer in Fluidverbindung steht,

dadurch gekennzeichnet, dass die gasberührten metallischen Bauteile des Reformerrohres aus einer Nickelbasislegierung bestehen und diejenigen gasberührten Oberflächen, deren Temperatur während des Betriebs unter festgelegten Dampfreformierungsbedingungen zwischen 650 und 800 °C, bevorzugt zwischen 680 und 750 °C, meist bevorzugt zwischen 690 und 720 °C liegt, mit einer Aluminium-Diffusionsschicht ausgerüstet sind.
Ferner ist es die Aufgabe der vorliegenden Erfindung, ein Verfahren zur Verfügung zu stellen, mit dem das erfindungsgemäße Reformerrohr so betrieben werden kann, dass sein Korrosionsschutzpotential voll ausgeschöpft und eine hohe Standzeit erreicht werden kann. Diese Aufgabe wird durch ein Verfahren mit den Merkmalen des Anspruchs 9 gelöst. Auch hier ergeben sich weitere Ausgestaltungen des Verfahrens gemäß Erfindung aus den Unteransprüchen.

Erfindunasaemäßes Verfahren:

Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:

(a) Bereitstellen eines den Einsatzstoff enthaltenden Einsatzgasstroms und Zugabe von Reformierungsdampf, wobei sich aus dem molaren Verhältnis der zugeführten Reformierungsdampfmenge und dem im Einsatzstoff vorhandenen Kohlenstoff ein Dampf/Kohlenstoffverhältnis S/C ergibt,
(b) Katalytisches Umsetzen des Einsatzstoffes unter Dampfreformierungsbedingungen zu einem Kohlenoxide und Wasserstoff enthaltenden Synthesegasprodukt,
(c) Ausleiten und optional Aufarbeiten des Synthesegasprodukts,

dadurch gekennzeichnet, dass das katalytische Umsetzen in Schritt (b) in einem Reformerrohr nach Anspruch 1 bei festgelegten Dampfreformierungsbedingungen, insbesondere hinsichtlich des Dampf/Kohlenstoffverhältnisses S/C und der Reformierungstemperatur, erfolgt, wobei die gasberührten metallischen Bauteile des Reformerrohres aus einer Nickelbasislegierung bestehen und diejenigen gasberührten Oberflächen, deren Temperatur zwischen 650 und 800 °C, bevorzugt zwischen 680 und 750 °C, meist bevorzugt zwischen 690 und 720 °C liegt, mit einer Aluminium-Diffusionsschicht ausgerüstet sind.

Die Erfindung betrifft ferner einen Reformerofen, der mit dem erfindungsgemäßen Reformerrohr ausgestattet ist.

Unter Fluidverbindung zwischen zwei Bereichen des Reformerrohres wird dabei jegliche Art von Verbindung verstanden, die es ermöglicht, dass ein Fluid, beispielsweise der Einsatzgasstrom oder der Synthesegasproduktstrom, von dem einen zu dem anderen der beiden Bereiche strömen kann, unbeachtlich etwaiger zwischengeschalteter Bereiche oder Bauteile,

Mit Wärmeaustauschbeziehung ist die Möglichkeit des Wärmeaustauschs oder der Wärmeübertragung zwischen zwei Bereichen des Reformerrohres gemeint, wobei alle Mechanismen des Wärmeaustauschs oder der Wärmeübertragung wie Wärmeleitung, Wärmestrahlung oder konvektiver Wärmetransport zum Tragen kommen können.

Unter Dampfreformierungsbedingungen sind die dem Fachmann an sich bekannten Verfahrensbedingungen, insbesondere von Temperatur, Druck und Verweilzeit, zu verstehen, wie sie oben und nachfolgend beispielhaft genannt und detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt.

Die Dampfreformierungsbedingungen werden üblicherweise im Hinblick auf eine Zielzusammensetzung des Synthesegasproduktes festgelegt. Wichtige Parameter sind dabei das Dampf/Kohlenstoffverhältnis (S/C-Verhältnis), der Eintrittsdruck in die Reformerrohre und die Reformierungstemperatur. Es können aber auch Feineinstellungen der Dampfreformierungsbedingungen in der Weise vorgenommen werden, dass die kritischen Temperaturbereiche an denjenigen Bauteil-Oberflächen auftreten, die mit einer Aluminium-Diffusionsschicht ausgerüstet sind.

Unter der Reformierungstemperatur wird die Maximaltemperatur des das Reformerrohr durchströmenden Gases verstanden, die sich aus der Wechselwirkung zwischen den Wärmetransportvorgängen und der endothermen Reformierungsreaktion ergibt. Sie dient als Basis zur Berechnung des Reformierungsgleichgewichtes. Im Rahmen der vorliegenden Erfindung entspricht die Reformierungstemperatur der Temperatur des Gases kurz vor seinem Eintritt in die Wärmetauscherrohre.

Unter gasberührten Bauteilen bzw. gasberührten Oberflächen werden diejenigen Bauteile bzw. Oberflächen verstanden, die bei erfindungsgemäßem Betrieb des Reformerrohres mit den gasförmigen Edukten bzw. Produkten der Reformierungsreaktion in Kontakt kommen.

Der Erfindung liegt die Erkenntnis zugrunde, dass unter den technisch üblichen Bedingungen bei der Dampfreformierung bei einem Reformerrohr mit internem Wärmeaustausch die gasberührten Oberflächen metallischer Bauteile wirkungsvoll durch die Ausstattung mit einer Aluminium-Diffusionsschicht vor der Metal-Dusting-Korrosion geschützt werden können. Ihre volle Wirksamkeit entfaltet diese Schutzmaßnahme, wenn bei festgelegten Betriebsbedingungen bzw. Dampfreformierungsbedingungen des Reformerrohres, insbesondere hinsichtlich des Dampf/Kohlenstoffverhältnisses S/C und der Reformierungstemperatur, diejenigen Oberflächen gasberührter metallischer Bauteile, deren Oberflächentemperatur zwischen 650 und 800 °C, bevorzugt zwischen 680 und 750 °C, meist bevorzugt zwischen 690 und 720 °C liegt, mit einer Aluminium-Diffusionsschicht ausgerüstet sind.

Es hat sich gezeigt, dass unter den technisch üblichen Bedingungen bei der Dampfreformierung die Metal-Dusting-Korrosion oberhalb von etwa 700 °C aufgrund der Gleichgewichtslage der beteiligten Reaktionen nicht mehr oder nur noch sehr geringfügig auftritt. Hinzu tritt die Erkenntnis, dass bei Aluminium-Diffusionsschichten oberhalb von etwa 700 °C eine verstärkte bzw. beschleunigte Eindiffusion von Aluminium in das Volumen des zu schützenden metallischen Bauteils auftritt, wobei die Diffusionsneigung weitgehend unabhängig von den Dampfreformierungsbedingungen ist. Hierdurch kommt es zu einer Dickenzunahme der Aluminium-Diffusionsschicht bei gleichzeitiger Abnahme der Aluminium-Konzentration in dieser Schicht, wodurch die Wirksamkeit der Schicht als Korrosionsschutz beeinträchtigt wird.

Andererseits ist unter den technisch üblichen Bedingungen bei der Dampfreformierung die Metal-Dusting-Korrosion unterhalb von etwa 700 °C aufgrund der Gleichgewichtslage der beteiligten Reaktionen begünstigt und verläuft im Hinblick auf die Reaktionskinetik auch ausreichend schnell, um im Hinblick auf technisch relevante Standzeiten zu einer signifikanten Materialzerstörung zu führen. Hier ist jedoch die Eindiffusion von Aluminium in das Volumen des zu schützenden, unterliegenden metallischen Bauteils und somit der Aluminiumverlust aus der Schutzschicht so langsam, dass technisch ausreichende Standzeiten für eine Aluminium-Diffusionsschichtmit ausreichender Aluminium-Konzentration und ein mit einer solchen Schicht geschütztes Bauteil erreicht werden, bevor es zu signifikanter Korrosion kommt, die den Austausch des Bauteils erforderlich macht.

## Bevorzugte Ausgestaltungen der Erfindung

Bevorzugt sind bei dem erfindungsgemäßen Reformerrohr diejenigen Bereiche der Innenwand des mindestens einen Wärmetauscherrohres, deren Oberflächentemperatur zwischen 650 und 800 °C, bevorzugt zwischen 680 und 750 °C, meist bevorzugt zwischen 690 und 720 °C liegt, mit einer Aluminium-Diffusionsschicht ausgerüstet. Durch die fortschreitende Abkühlung des Gasstroms beim Durchströmen des Wärmetauscherrohres aufgrund des indirekten Wärmetauschs mit dem die Katalysatorschüttung durchströmenden Einsatzgasstroms ergibt es sich, dass genannten Temperaturbereiche insbesondere auf der Innenseite bzw. Innenwand des Wärmetauscherrohres auftreten, so dass hier eine Ausstattung mit einer Korrosionsschutzschicht besonders sinnvoll ist.

Eine weitere Ausgestaltung des erfindungsgemäßen Reformerrohrs ist dadurch gekennzeichnet, dass die Innenwand des mindestens einen Wärmetauscherrohres vollständig mit einer Aluminium-Diffusionsschicht ausgerüstet ist. Zwar tritt dann, wie oben erörtert wurde, in den Bereichen der Innenwand des Wärmetauscherrohres, deren Temperatur oberhalb der genannten Temperaturbereiche liegt, vergleichsweise rascher Verlust an Aluminium durch Eindiffusion in die metallische Unterlage auf. Dies ist aber im Hinblick auf die Metal-Dusting-Korrosion unschädlich, da diese oberhalb der genannten Temperaturbereiche nicht mehr bzw. nur noch untergeordnet verläuft. Zudem ist der Fertigungsaufwand für ein solches, innen vollständig mit einer Aluminium-Diffusionsschicht ausgerüstetes Wärmetauscherrohr geringer, da zuvor nicht festgelegt werden muss, welche Bereiche der Innenwand des Wärmetauscherrohres mit der Aluminium-Diffusionsschicht ausgestattet werden müssen und welche dagegen nicht. Ferner ergibt sich eine höhere Flexibilität für den Einsatz des Wärmetauscherrohres, da sich bei Änderungen der Reformierungsbedingungen die Lage der kritischen Temperaturbereiche auf der Innenwand des Wärmetauscherrohres verschieben kann.

In einem weiteren Aspekt der Erfindung sind auch diejenigen Oberflächen gasberührter metallischer Bauteile des Reformerrohres, deren Oberflächentemperaturen während des Betriebs unter festgelegten Dampfreformierungsbedingungen im Bereich von 800 bis 400 °C, bevorzugt von 750 bis 400 °C, meist bevorzugt von 720 bis 400 °C liegen, mit einer Aluminium-Diffusionsschicht ausgerüstet sind. Unterhalb von etwa 400 °C ist die Kinetik der beteiligten Reaktionen so langsam, dass die Metal-Dusting-Korrosion im Hinblick auf technisch relevante Standzeiten praktisch keine Rolle mehr spielt und sich somit Korrosionsschutzmaßnahmen erübrigen.

Bevorzugt besteht bei dem erfindungsgemäßen Reformerrohr das mindestens eine Wärmetauscherrohr aus einer Nickelbasislegierung. Diese Legierungen verfügen über eine gute Korrosions- und/oder Hochtemperaturbeständigkeit (Kriechfestigkeit). Zudem ist das erfindungsgemäße Reformerrohr bevorzugt auf der Innenseite und auf der Außenseite mit einer Aluminium-Diffusionsschicht ausgerüstet. Diese Maßnahme erhöht den Fertigungsaufwand nur unwesentlich; sie bietet aber zusätzlichen Schutz, wenn bei ungewöhnlichen Betriebsweisen des Reformerrohres, beispielsweise bei der Inbetriebnahme, Außerbetriebnahme oder bei Betriebsstörungen, auch an der Außenwand des Wärmetauscherrohres für die Metal-Dusting-Korrosion kritische Temperaturen auftreten.

Besonders bevorzugt ist es, wenn bei dem erfindungsgemäßen Reformerrohr auf die Innenwand des mindestens einen Wärmetauscherrohres so viel Aluminium aufgebracht wird, dass die Aluminiumkonzentration in der Diffusionsschicht mindestens 20 Gew.-%, bevorzugt mindestens 30 Gew.-% beträgt. Materialuntersuchungen haben gezeigt, dass eine ausreichende Korrosionsbeständigkeit der mit einer Aluminium-Diffusionsschicht ausgestatteten Werkstücke über 8000 Betriebsstunden unter Dampfreformierungsbedingungen erhalten wird, wenn diese Aluminiumkonzentrationen eingehalten werden.

Alternativ oder zusätzlich wird es bevorzugt, wenn, bezogen auf die üblichen Dimensionen der verwendeten Wärmetauscherrohre, so viel Aluminium aufgebracht wird, dass die Aluminiumkonzentration in der Legierung, bezogen auf das Metallvolumen des beschichteten Wärmetauscherrohres, mindestens 4 Gew.-%, bevorzugt mindestens 5 Gew.-% beträgt. Auch mit diesem Kriterium wird eine ausreichende Korrosionsbeständigkeit der mit einer Aluminium-Diffusionsschicht ausgestatteten Werkstücke über 8000 Betriebsstunden unter Dampfreformierungsbedingungen erhalten, wie anhand von Materialuntersuchungen gezeigt werden konnte.

Besonders bevorzugt wird es, dass das erfindungsgemäße Reformerrohr mit einem helixförmig gewendelten Wärmetauscherrohr ausgestattet ist und vorzugsweise zwei Wärmetauscherrohre vorhanden sind, die in Form einer Doppelhelix in der Katalysatorschüttung angeordnet sind. Diese Ausgestaltung des Reformerrohr stellt einen günstigen Kompromiss zwischen apparativem Aufwand und günstigen Wärmeübertragungseigenschaften dar.

In besonderer Ausgestaltung des erfindungsgemäßen Verfahrens wird bei seiner Durchführung mindestens ein Wärmetauscherrohr verwendet, bei dem diejenigen Bereiche der Innenwand, deren Oberflächentemperatur zwischen 650 und 800 °C, bevorzugt zwischen 680 und 750 °C, meist bevorzugt zwischen 690 und 720 °C liegt, mit einer Aluminium-Diffusionsschicht ausgerüstet sind. Durch die fortschreitende Abkühlung des Gasstroms beim Durchströmen des Wärmetauscherrohres aufgrund des indirekten Wärmetauschs mit dem die Katalysatorschüttung durchströmenden Einsatzgasstroms ergibt es sich, dass genannten Temperaturbereiche insbesondere auf der Innenseite bzw. Innenwand des Wärmetauscherrohres auftreten, so dass hier eine Ausstattung mit einer Korrosionsschutzschicht besonders sinnvoll ist.

Bevorzugt sind bei der Durchführung des erfindungsgemäßen Verfahrens auch diejenigen Oberflächen gasberührter metallischer Bauteile des Reformerrohres, deren Oberflächentemperaturen während des Betriebs unter festgelegten Dampfreformierungsbedingungen im Bereich von 800 bis etwa 400 °C, bevorzugt von 750 bis etwa 400 °C, meist bevorzugt von 720 bis etwa 400 °C liegen, mit einer Aluminium-Diffusionsschicht ausgerüstet. Unterhalb von etwa 400 °C ist die Kinetik der beteiligten Reaktionen so langsam, dass die Metal-Dusting-Korrosion im Hinblick auf technisch relevante Standzeiten praktisch keine Rolle mehr spielt und sich somit Korrosionsschutzmaßnahmen erübrigen.

In besonderer Ausgestaltung des erfindungsgemäßen Verfahrens ist die Innenwand des mindestens einen Wärmetauscherrohres vollständig mit einer Aluminium-Diffusionsschicht ausgerüstet. Zwar tritt dann, wie oben erörtert wurde, in den Bereichen der Innenwand des Wärmetauscherrohres, deren Temperatur oberhalb der genannten Temperaturbereiche liegt, vergleichsweise rascher Verlust an Aluminium durch Eindiffusion in die metallische Unterlage auf. Dies ist aber im Hinblick auf die Metal-Dusting-Korrosion unschädlich, da diese oberhalb der genannten Temperaturbereiche nicht mehr bzw. nur noch untergeordnet verläuft. Zudem ist der Fertigungsaufwand für ein solches, innen vollständig mit einer Aluminium-Diffusionsschicht ausgerüstetes Wärmetauscherrohr geringer, da zuvor nicht festgelegt werden muss, welche Bereiche der Innenwand des Wärmetauscherrohres mit der Aluminium-Diffusionsschicht ausgestattet werden müssen und welche dagegen nicht. Ferner ergibt sich eine höhere Flexibilität für den Einsatz des Wärmetauscherrohres, da sich bei Änderungen der Reformierungsbedingungen die Lage der kritischen Temperaturbereiche auf der Innenwand des Wärmetauscherrohres verschieben kann.

Die Erfindung umfasst auch einen Reformerofen, umfassend feuerfest ausgekleidete oder feuerfest zugestellte Wände, eine Decke und einen Boden und einen dadurch gebildeten Innenraum, dadurch gekennzeichnet, dass mindestens ein Reformerrohr gemäß Anspruch 1 bis 8 und mindestens ein Brenner zur Beheizung des Reformerrohrs in dem Innenraum oder in einem mit dem Innenraum bezüglich der Brennerrauchgase in Fluidverbindung stehenden Nebenraum angeordnet sind.

In besonderer Ausgestaltung des erfindungsgemäßen Reformerofens ist das mindestens eine Reformerrohr, frei hängend oder frei stehend in dem Innenraum angeordnet, wobei der die Reaktionskammer umfassende Teil des Mantelrohrs im Innenraum angeordnet ist und der die Austrittskammer umfassende Teil des Mantelrohrs mindestens teilweise durch die Decke oder den Boden durchgeführt wird. Frei hängend oder frei stehend bedeutet in diesem Zusammenhang, dass nur das die Austrittskammer umfassende Ende des Reformerrohrs in mechanischem Kontakt mit der Decke oder dem Boden des Reformerofens steht.

Dies ist besonders günstig, da auf diese Weise thermisch-mechanische Spannungen zwischen dem Eintritt für den Einsatzgasstrom und dem Austritt für den Synthesegasproduktstrom vermieden werden, die aufgrund der beträchtlichen Temperaturunterschiede bei den aus dem Stand der Technik bekannten Reformerrohren entstehen. Bei letzteren werden daher aufwändige Maßnahmen, wie beispielsweise die Verwendung von Spannungskompensatoren (sog. Pigtails) oder von Seilzügen, eingesetzt, um die auftretenden Spannungen und deren negative Auswirkungen, beispielsweise eine Verformung des Reformerrohrs, zu kompensieren. Dies ist bei der frei hängenden oder frei stehenden Anordnung des Reformerrohrs nicht mehr notwendig.

In weiterer bevorzugter Ausgestaltung des erfindungsgemäßen Reformerofens sind eine Vielzahl von Reformerrohren und Brennern so in dem Innenraum angeordnet, dass die Längsachsen der durch die Brenner erzeugten Flammen parallel zu den Längsachsen der Reformerrohre ausgerichtet sind. Auf diese Weise kann sichergestellt werden, dass durch einen Brenner die um ihn angeordneten Reformerrohr gleichmäßig beheizt werden. Ferner wird den Reformerrohren durch die parallel verlaufenden Flammenachsen auf einer längeren Strecke Strahlungswärme zugeführt und eine lokale Überhitzung der Außenseiten der Reformerrohre vermieden.

**Ausführungsbeispiel**

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigt die einzige Figur

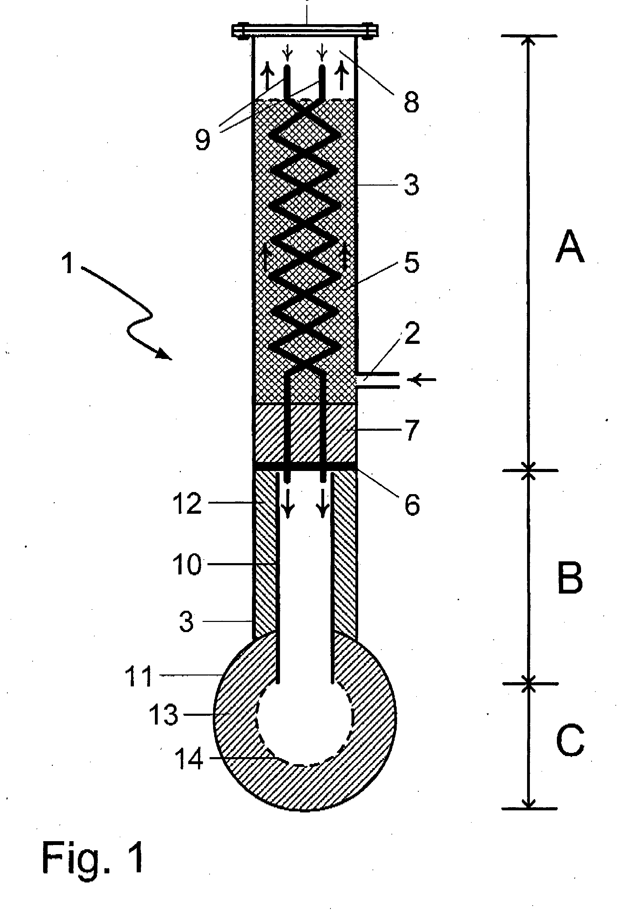

Fig. 1    ein Reformerrohr gemäß einer bevorzugten Ausführungsform der Erfindung.

Das in Fig. 1 bildlich dargestellte, erfindungsgemäße Reformerrohr 1 ist in die Abschnitte A (Reaktionskammer), B (Austrittskammer) und C (Sammelleitung) unterteilt.

Über die Eintrittsleitung 2 tritt entschwefeltes Erdgas gemeinsam mit Reformierungsdampf in die im oberen Teil des Mantelrohrs 3 angeordnete Reaktionskammer A ein. Das Mantelrohr besteht aus einem Nickel-Chrom-Stahl, beispielsweise des Typs G-X45NiCrNbTi3525. Die Eintrittstemperatur des Einsatzgases beträgt 600 °C, die auf das Katalysatorvolumen bezogene Raumgeschwindigkeit beträgt typischerweise 4000 bis 5000 $m_N^3/(m^3\,h)$.

Im vorliegenden Ausführungsbeispiel ist das Reformerrohr senkrecht stehend mit dem offenen Rohrende des Mantelrohrs 3 in oberer Position angeordnet und wird von außen mittels Brennern beheizt (nicht dargestellt in Fig. 1). Das offene Rohrende des Mantelrohrs ist beim Betrieb des Reformerrohres mit einer Verschlussvorrichtung 4, beispielsweise einem aufgeflanschten Deckel, verschlossen, der für Revisionsvorgänge und zum Befüllen bzw. Entleeren des Katalysators geöffnet werden kann.

Das Erdgas und der Reformierungsdampf treten nach dem Eintritt in das Mantelrohr in die Katalysatorschüttung

ein, die aus Partikeln eines festen, nickelbasierten Reformierungskatalysators gebildet wird. Die Einsatzstoffe strömen sodann aufwärts durch das Katalysatorbett, wie es durch Strömungspfeile angedeutet ist. Die Katalysatorschüttung ist mittels des Trennbodens 6 in dem Mantelrohr fixiert. Zwischen Trennboden und Katalysatorschüttung befindet sich eine Schüttung aus Inertkörpern 7 als Auflage für den Katalysator.

An dem Reformierungskatalysator findet die endotherme Dampfreformierungsreaktion statt. Das teilumgesetzte Erdgas, das neben Kohlenoxiden und Wasserstoff auch noch nicht umgesetztes Methan enthält, tritt nach Verlassen der Katalysatorschüttung in einen Freiraum 8 ein, der an dem verschlossenen Rohrende 4 des Mantelrohres angeordnet ist. Anschließend tritt der teilumgesetzte Einsatzgasstrom in das Eintrittsende der innerhalb der Katalysatorschüttung angeordneten, gewendelten Wärmetauscherrohre 9 ein. Der durch die Wärmetauscherrohre 9 strömende Gasstrom gibt einen Teil seiner fühlbaren Wärme im Gegenstrom an die Katalysatorschüttung und den durch sie strömenden Einsatzgasstrom ab. Die Wärmetauscherrohre bestehen aus Nickelbasislegierungen mit guter Beständigkeit gegen die Metal Dusting-Korrosion wie z.B. Alloy 601, 602 CA, 617, 690, 692, 693, HR 160, HR 214 oder sogenannte Mehrschichtmaterialien, bei denen die Rohre mit Zinn-Nickel- oder Aluminium-Nickel-Legierungen beschichtet sind. Zusätzlich sind die Wärmetauscherrohre auf ihren Innenseiten und bevorzugt auch auf den Außenseiten mit einer Aluminium-Diffusionsschicht als Korrosionsschutzschicht ausgestattet.

Nach Durchströmen der Wärmetauscherrohre tritt der Synthesegasproduktstrom in die Austrittskammer B ein. Dazu werden die Austrittsenden beider Wärmetauscherrohre 9 durch den Trennboden 6 durchgeführt und auf diese Weise fixiert. Sie münden dann austrittsseitig in das Innenrohr 10 ein, das die Verbindung zwischen den Wärmetauscherrohren 9 und der Sammelleitung 11 darstellt. Das Innenrohr ist ebenfalls aus einem der oben genannten, metallischen Werkstoffe gefertigt und seine Innenwand und bevorzugt auch seine Außenwand mit einer Aluminium-Diffusionsschicht als Korrosionsschutzschicht ausgestattet. Zwischen der Außenwand des Innenrohrs und der Innenwand des Mantelrohrs ist ein gasdurchlässiges Isoliermaterial 12 angebracht.

Das Innenrohr 10 ist mit der Sammelleitung 11 verbunden (Abschnitt C), die auf ihrer Innenseite mit Isoliermaterial 13 und/oder einer korrosionsresisteriten, beispielsweise keramischen Beschichtung 14 versehen ist. Über die Sammelleitung wird der Synthesegasproduktstrom aus dem Reformerrohr 1 ausgeleitet und wird der weiteren Aufarbeitung zugeführt. Diese kann je nach Verwendungszweck des Synthesegasproduktes eine Kohlenmonoxid-Konvertierung, eine Gaswäsche zur Abtrennung von Kohlendioxid, eine Druckwechseladsorption zur Wasserstoffabtrennung sowie weitere Aufarbeitungsstufen umfassen.

Zahlenbeispiel (Erfindung)

Es wurde ein erfindungsgemäßes Reformerrohr unter Dampfreformierungsbedingungen über eine Betriebsdauer von 8000 Betriebsstunden betrieben. Die Reformierungstemperatur betrug 820 °C, das S/C-Verhältnis betrug 3,6, der Eintrittsdruck in das Reformerrohr betrug 33 bar, absolut. Das Reformerrohr war mit zwei helixförmig gewendelten Wärmetauscherrohren ausgestattet, die aus einer Nickelbasislegierung bestanden und auf ihrer Innenwand mit einer Aluminium-Diffusionsschicht versehen waren.

Nach Beendigung des Reformerbetriebs wurde eines der Wärmetauscherrohre ausgebaut und es wurden Materialproben von dessen Innenwand bei verschiedenen Längenabschnitten entnommen. Aufgrund des ermittelten Temperaturverlaufes entsprechen die jeweiligen Längenkoordinaten verschiedenen stationären Temperaturen.

Die entnommenen Proben wurden metallographisch hinsichtlich ihrer Oberflächenmorphologie sowie mittels SEM/EDS-Messungen (energiedispersive Röntgenanalyse) zur Bestimmung der Dicke und Zusammensetzung der Aluminium-Diffusionsschicht untersucht. Bei keiner der entnommenen Proben wurden Anzeichen der Metal-Dusting-Korrosion beobachtet. Insbesondere wurde weder Lochfraß noch ein Auftreten von Rissen in der Schutzschicht beobachtet.

In Tabelle 1 sind die dabei gemessenen Schichtdicken und mittleren Aluminium-Gehalte in der Schutzschicht zusammengestellt. Wie der Tabelle zu entnehmen ist, wird oberhalb von 673 °C und insbesondere oberhalb von 818 °C unter den vorgegebenen Betriebsbedingungen eine deutliche Dickenzunahme der Aluminium-Diffusionsschicht unter gleichzeitiger Abnahme der mittleren Aluminium-Gehalte in dieser Schicht zu beobachten.

**Tabelle 1:** Schichtdicken und mittlere Aluminium-Gehalte in der Schutzschicht für Proben aus verschiedenen Abschnitten der Innenseite eines Wärmetauscherrohres nach 8000 Betriebsstunden unter Dampfreformierungsbedingungen

| Temperatur °C | Schichtdicke $\mu$m | mittlerer Al-Gehalt Gew.-% |
|---|---|---|
| 627 | 143 | 34 |
| 650 | 149 | |
| 673 | 149 | |

(fortgesetzt)

| Temperatur °C | Schichtdicke μm | mittlerer Al-Gehalt Gew.-% |
|---|---|---|
| 696 | 174 | |
| 725 | 170 | |
| 740 | 177 | |
| 818 | 254 | 21 |

Die beiden bei 627 °C und 818 °C gewonnenen Proben wurden hinsichtlich ihres horizontalen Schichtaufbaus eingehender untersucht. In Tabelle 2 sind die dabei erhaltenen, lokalen Aluminium-Gehalte in Abhängigkeit von der Entfernung von der Oberfläche (Tiefe) zusammengestellt.

Es ist deutlich erkennbar, dass die höhere Oberflächentemperatur zu einer Verbreiterung bzw. Dickenzunahme der Aluminium-Diffusionsschicht führt, wobei der AluminiumGehalt innerhalb der ersten 100 μm abnimmt. Eine Ausnahme bildet lediglich der Al-Gehalt, der direkt an der Oberfläche gemessen wird.

**Tabelle 2:** Lokale Aluminium-Gehalte in Abhängigkeit von der Entfernung von der Oberfläche in das Innere des Werkstückes (Tiefe) für bei 627 °C und 818 °C gewonnene Proben

| | *Probe bei T = 627 °C* | *Probe bei T = 818 °C* |
|---|---|---|
| Tiefe μm | lokaler Al-Gehalt Gew.-% | lokaler Al-Gehalt Gew.-% |
| 0 | 25 | 37 |
| 25 | 35 | 24 |
| 50 | 37 | 23 |
| 75 | 35 | 22 |
| 100 | 34 | 20 |
| 125 | 20 | 20 |
| 150 | 4 | 19 |
| 175 | 0 | 17 |
| 200 | 0 | 4 |
| 225 | 0 | 6 |
| 250 | 0 | 3 |
| | | |
| *Mittelwert* | *34* | *21* |

In Tabelle 3 werden die errechneten Boudouard-Temperaturen beim Betrieb der Dampfreformierungsanlage bei verschiedenen S/C-Verhältnissen und Reformierungstemperaturen zusammengestellt. Die Boudouard-Temperatur ist als diejenige Temperatur definiert, bei der die Aktivität gemäß Gleichung (2a) eins beträgt.

Wie Tabelle 3 zu entnehmen ist, nimmt die Boudouard-Temperatur mit zunehmendem S/C-Verhältnis und abnehmender Reformierungstemperatur ab. Oberhalb der jeweiligen Boudouard-Temperatur, also bei einer Aktivität gemäß Gleichung (2a) kleiner als eins, tritt die Metal-Dusting-Korrosion nicht mehr in nennenswertem Ausmaß auf, da hierfür kein thermodynamisches Potential mehr vorhanden ist.

**Tabelle 3:** Boudouard-Temperatur beim Betrieb der Dampfreformierungsanlage bei verschiedenen S/C-Verhältnissen und Reformierungstemperaturen

| | S/C | ReformierungsTemperatur °C | Boudouard-Temperatur °C |
|---|---|---|---|
| Fall 1 | 3,1 | 900 | 783 |
| Fall 2 | 3,3 | 870 | 763 |
| Fall 3 | 3,5 | 840 | 742 |

(fortgesetzt)

|  | S/C | ReformierungsTemperatur °C | Boudouard-Temperatur °C |
|---|---|---|---|
| Fall 4 | 3,8 | 810 | 718 |
| Fall 5 | 4,1 | 780 | 693 |

Vergleichsbeispiel

Es wurde ein Reformerrohr unter denselben Dampfreformierungsbedingungen über eine Betriebsdauer von 8000 Betriebsstunden betrieben wie im Zahlenbeispiel gemäß Erfindung beschrieben. Das Reformerrohr war mit zwei helixförmig gewendelten Wärmetauscherrohren ohne Aluminium-Diffusionsschicht ausgestattet.

Nach Beendigung des Reformerbetriebs wurde wiederum eines der Wärmetauscherrohre ausgebaut und es wurden Materialproben von dessen Innenwand bei verschiedenen Längenabschnitten entnommen, die aufgrund des ermittelten Temperaturverlaufes verschiedenen stationären Temperaturen entsprechen. Die entnommenen Proben entsprachen daher den nachfolgend angegebenen Temperaturen, wobei in Klammern die jeweils zugehörige Boudouard-Aktivität gemäß Gleichung (2b) angegeben ist: 623 °C (9,8), 644 °C (5,8), 663 °C (3,7), 685 °C (2,2), 696 °C (1,7), 706 °C (1,3)

Auch diese Proben wurden metallographisch hinsichtlich ihrer Oberflächenmorphologie untersucht. Alle Proben zeigten dabei deutlich erkennbar Korrosionserscheinungen, wobei die Korrosionsneigung mit zunehmender Temperatur abnahm, im Einklang mit der in gleicher Richtung sinkender Boudouard-Aktivität. Die 623 °C entsprechende Probe wies extrem starke, die 706 °C entsprechende Probe wies dagegen nur geringfügige Korrosion auf.

Bei noch höheren Temperaturen, bei denen die Boudouard-Aktivität unter 1 fällt, ist demnach nicht mehr mit einer signifikanten Metal-Dusting-Korrosion zu rechnen.

**Gewerbliche Anwendbarkeit**

Mit der Erfindung wird ein Reformerrohr vorgeschlagen, das einen internen Wärmeaustausch zwischen dem Einsatzgas und dem zu Synthesegasprodukten teilumgesetzten Produktgas ermöglicht, wodurch sich Vorteile hinsichtlich des Energieverbrauchs bei der Verwendung des Reformerrohres ergeben. Durch die erfindungsgemäße Ausstattung des Reformerrohres mit einer Aluminium-Diffusionsschicht als Korrosionsschutzschicht wird es ermöglicht, der Metal-Dusting-Korrosion wirkungsvoll gegenzusteuern, wenn insbesondere die metallischen Bauteile und Bereiche des Reformerrohres entsprechend ausgerüstet werden, deren Oberflächentemperatur in den genannten, kritischen Bereichen liegt. Hierdurch ergibt sich eine mögliche längere Betriebsdauer des Reformerrohres und somit wirtschaftliche Vorteile. Andererseits erübrigt sich ein Korrosionsschutz für Bereiche des Reformerrohres, deren Oberflächentemperatur oberhalb der genannten, kritischen Bereiche liegt, wodurch Kosten für die aufwendige Materialbehandlung eingespart werden können.

**Bezugszeichenliste**

[1]   Reformerrohr
[2]   Eintrittsleitung
[3]   Mantelrohr
[4]   Verschlussvorrichtung
[5]   Katalysatorschüttung
[6]   Trennboden
[7]   Schüttung aus Inertkörpern
[8]   Freiraum
[9]   Wärmetauscherrohre
[10]  Innenrohr
[11]  Sammelleitung
[12]  Isolierschicht
[13]  Isolierschicht
[14]  Beschichtung

[A]   Reaktionskammer
[B]   Austrittskammer
[C]   Sammelleitung

**Patentansprüche**

1. Reformerrohr zur Umwandlung kohlenwasserstoffhaltiger Einsatzstoffe, vorzugsweise Erdgas, in ein Kohlenoxide und Wasserstoff enthaltendes Synthesegasprodukt unter Dampfreformierungsbedingungen, umfassend

   (a) ein äußeres, drucktragendes Mantelrohr, wobei das Mantelrohr mittels eines Trennbodens in eine Reaktionskammer und eine Austrittskammer unterteilt wird und wobei die Reaktionskammer von außen beheizbar ist,
   (b) eine in der Reaktionskammer angeordnete Schüttung eines für die Dampfreformierung aktiven, festen Katalysators,
   (c) einen im Bereich der Reaktionskammer angeordneten Eintritt für den den Einsatzstoff enthaltenden Einsatzgasstrom, wobei der Eintritt des Einsatzgasstroms in Fluidverbindung mit der Katalysatorschüttung steht,
   (d) mindestens ein innerhalb der Reaktionskammer und innerhalb der Katalysatorschüttung angeordnetes Wärmetauscherrohr, dessen Eintrittsende in Fluidverbindung mit der Katalysatorschüttung steht und dessen Austrittsende in Fluidverbindung mit der Austrittskammer steht, wobei der Einsatzgasstrom nach Eintritt in die Reaktionskammer zunächst die Katalysatorschüttung und nachfolgend im Gegenstrom das Wärmetauscherrohr durchströmt und sich dabei kontinuierlich abkühlt und wobei das Wärmetauscherrohr in einer Wärmeaustauschbeziehung mit der Katalysatorschüttung und dem durch sie strömenden Einsatzgasstrom steht,
   (e) eine Sammelleitung für das Synthesegasprodukt, die mit der Austrittskammer in Fluidverbindung steht,

   **dadurch gekennzeichnet, dass** die gasberührten metallischen Bauteile des Reformerrohres aus einer Nickelbasislegierung bestehen und diejenigen gasberührten Oberflächen, deren Temperatur während des Betriebs unter festgelegten Dampfreformierungsbedingungen zwischen 650 und 800 °C, bevorzugt zwischen 680 und 750 °C, meist bevorzugt zwischen 690 und 720 °C liegt, mit einer Aluminium-Diffusionsschicht ausgerüstet sind.

2. Reformerrohr nach Anspruch 1, **dadurch gekennzeichnet, dass** diejenigen Bereiche der Innenwand des mindestens einen Wärmetauscherrohres, deren Oberflächentemperatur zwischen 650 und 800 °C, bevorzugt zwischen 680 und 750 °C, meist bevorzugt zwischen 690 und 720 °C liegt, mit einer Aluminium-Diffusionsschicht ausgerüstet sind.

3. Reformerrohr nach Anspruch 1 oder 2, **dadurch gekennzeichnet, dass** die Innenwand des mindestens einen Wärmetauscherrohres vollständig mit einer Aluminium-Diffusionsschicht ausgerüstet ist.

4. Reformerrohr nach einem der vorigen Ansprüche, **dadurch gekennzeichnet, dass** auch diejenigen Oberflächen gasberührter metallischer Bauteile des Reformerrohres, deren Oberflächentemperaturen während des Betriebs unter festgelegten Dampfreformierungsbedingungen im Bereich von 800 bis etwa 400 °C, bevorzugt von 750 bis etwa 400 °C, meist bevorzugt von 720 bis etwa 400 °C liegen, mit einer Aluminium-Diffusionsschicht ausgerüstet sind.

5. Reformerrohr nach einem der vorigen Ansprüche, **dadurch gekennzeichnet, dass** das mindestens eine Wärmetauscherrohr aus einer Nickelbasislegierung besteht und auf der Innenseite und auf der Außenseite mit einer Aluminium-Diffusionsschicht ausgerüstet ist.

6. Reformerrohr nach einem der vorigen Ansprüche, **dadurch gekennzeichnet, dass** auf die Innenwand des mindestens einen Wärmetauscherrohres so viel Aluminium aufgebracht wird, dass die Aluminiumkonzentration in der Diffusionsschicht mindestens 20 Gew.-%, bevorzugt mindestens 30 Gew.-% beträgt.

7. Reformerrohr nach einem der vorigen Ansprüche, **dadurch gekennzeichnet, dass** das mindestens eine Wärmetauscherrohr mindestens auf einem Teil seiner Länge helixförmig gewendelt ist.

8. Reformerrohr nach einem der vorigen Ansprüche, **dadurch gekennzeichnet, dass** mindestens zwei Wärmetauscherrohre innerhalb der Katalysatorschüttung angeordnet sind.

9. Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:

(a) Bereitstellen eines den Einsatzstoff enthaltenden Einsatzgasstroms und Zugabe von Reformierungsdampf, wobei sich aus dem molaren Verhältnis der zugeführten Reformierungsdampfmenge und dem im Einsatzstoff vorhandenen Kohlenstoff ein Dampf/Kohlenstoffverhältnis S/C ergibt,
(b) Katalytisches Umsetzen des Einsatzstoffes unter Dampfreformierungsbedingungen zu einem Kohlenoxide und Wasserstoff enthaltenden Synthesegasprodukt,
(c) Ausleiten und optional Aufarbeiten des Synthesegasprodukts,

dadurch gekennzeichnet, dass das katalytische Umsetzen in Schritt (b) in einem Reformerrohr nach Anspruch 1 bei festgelegten Dampfreformierungsbedingungen, insbesondere hinsichtlich des Dampf/Kohlenstoffverhältnisses S/C und der Reformierungstemperatur, erfolgt, wobei die gasberührten metallischen Bauteile des Reformerrohres aus einer Nickelbasislegierung bestehen und diejenigen gasberührten Oberflächen, deren Temperatur während des Betriebs zwischen 650 und 800 °C, bevorzugt zwischen 680 und 750 °C, meist bevorzugt zwischen 690 und 720 °C liegt, mit einer Aluminium-Diffusionsschicht ausgerüstet sind.

10. Verfahren nach Anspruch 9, dadurch gekennzeichnet, dass diejenigen Bereiche der Innenwand des mindestens einen Wärmetauscherrohres, deren Oberflächentemperatur zwischen 650 und 800 °C, bevorzugt zwischen 680 und 750 °C, meist bevorzugt zwischen 690 und 720 °C liegt, mit einer Aluminium-Diffusionsschicht ausgerüstet sind.

11. Verfahren nach Anspruch 9 oder 10, dadurch gekennzeichnet, dass auch diejenigen Oberflächen gasberührter metallischer Bauteile des Reformerrohres, deren Oberflächentemperaturen während des Betriebs unter festgelegten Dampfreformierungsbedingungen im Bereich von 800 bis etwa 400 °C, bevorzugt von 750 bis etwa 400 °C, meist bevorzugt von 720 bis etwa 400 °C liegen, mit einer Aluminium-Diffusionsschicht ausgerüstet sind.

12. Verfahren nach einem der vorigen Ansprüche, dadurch gekennzeichnet, dass die Innenwand des mindestens einen Wärmetauscherrohres vollständig mit einer Aluminium-Diffusionsschicht ausgerüstet ist.

13. Reformerofen, umfassend feuerfest ausgekleidete oder feuerfest zugestellte Wände, eine Decke und einen Boden und einen dadurch gebildeten Innenraum, dadurch gekennzeichnet, dass mindestens ein Reformerrohr gemäß Anspruch 1 bis 8 und mindestens ein Brenner zur Beheizung des Reformerrohrs in dem Innenraum oder in einem mit dem Innenraum bezüglich der Brennerrauchgase in Fluidverbindung stehenden Nebenraum angeordnet sind.

14. Reformerofen nach Anspruch 13, dadurch gekennzeichnet, dass das dass mindestens eine Reformerrohr hängend oder stehend in dem Innenraum angeordnet ist, wobei der die Reaktionskammer umfassende Teil des Mantelrohrs im Innenraum angeordnet ist und der die Austrittskammer umfassende Teil des Mantelrohrs mindestens teilweise durch die Decke oder den Boden durchgeführt wird.

15. Reformerofen nach einem der vorigen Ansprüche, dadurch gekennzeichnet, dass eine Vielzahl von Reformerrohren und Brennern in dem Innenraum angeordnet sind und dass die Längsachsen der durch die Brenner erzeugten Flammen parallel zu den Längsachsen der Reformerrohre ausgerichtet sind.

**Claims**

1. Reformer tube for converting hydrocarbon-containing input materials, preferably natural gas, into a synthesis gas product comprising carbon oxides and hydrogen under steam reforming conditions comprising

(a) an outer, pressurized shell tube, wherein the shell tube is divided into a reaction chamber and an exit chamber by means of a separating tray and wherein the reaction chamber is externally heatable,
(b) a dumped bed of a steam-reforming-active solid catalyst arranged in the reaction chamber,
(c) an entry for the input gas stream comprising the input material arranged in the region of the reaction chamber, wherein the entry for the input gas stream is in fluid connection with the dumped catalyst bed,
(d) at least one heat exchanger tube arranged inside the reaction chamber and inside the dumped catalyst bed whose entry end is in fluid connection with the catalyst bed and whose exit end is in fluid connection with the exit chamber, wherein the input gas stream after entry into the reaction chamber initially flows through the catalyst bed and subsequently flows through the heat exchanger tube in countercurrent and is thus continually cooled and wherein the heat exchanger tube is in a heat exchange relationship with the dumped catalyst bed and the input gas stream flowing therethrough,
(e) a collection conduit for the synthesis gas product which is in fluid connection with the exit chamber,

**characterized in that** the gas-contacted metallic components of the reformer tube are made of a nickel-based alloy and those gas-contacted surfaces having a temperature during operation under defined steam reforming conditions of between 650°C and 800°C, preferably between 680°C and 750°C, most preferably between 690°C and 720°C, are equipped with an aluminium diffusion layer.

2. Reformer tube according to claim 1, **characterized in that** those regions of the inner wall of the at least one heat exchanger tube having a surface temperature between 650°C and 800°C, preferably between 680°C and 750°C, most preferably between 690°C and 720°C, are equipped with an aluminium diffusion layer.

3. Reformer tube according to claim 1 or 2, **characterized in that** the inner wall of the at least one heat exchanger tube is fully equipped with an aluminium diffusion layer.

4. Reformer tube according any of the preceding claims, **characterized in that** those surfaces of gas-contacted metallic components of the reformer tube having surface temperatures during operation under defined steam reforming conditions in the range from 800°C to 400°C, preferably from 750°C to approximately 400°C, most preferably from 720°C to approximately 400°C, are also equipped with an aluminium diffusion layer.

5. Reformer tube according any of the preceding claims, **characterized in that** at least one heat exchanger tube is made of a nickel-based alloy and is equipped on the inside and on the outside with an aluminium diffusion layer,

6. Reformer tube according any of the preceding claims, **characterized in that** a sufficient amount of aluminium is applied to the inner wall of the at least one heat exchanger tube to ensure that the aluminium concentration in the diffusion layer is at least 20 wt%, particularly preferably at least 30 wt%,

7. Reformer tube according any of the preceding claims, **characterized in that** at least one heat exchanger tube is helically coiled along at least a portion of its length.

8. Reformer tube according to any of the preceding claims, **characterized in that** at least two exchanger tubes are arranged inside the dumped catalyst bed.

9. Process for producing synthesis gas by catalytic steam reforming of hydrocarbon - containing input materials, preferably natural gas, under steam reforming conditions in the presence of a steam-reforming-active, solid catalyst comprising the steps of:

(a) provision of an input gas stream comprising the input material and addition of reforming steam, wherein a steam-carbon ratio S/C arises from the molar ratio of the supplied reforming steam amount and the carbon present in the input material,
(b) catalytic conversion of the input material under steam reforming conditions into a synthesis gas products comprising carbon oxides and hydrogen,
(c) discharging and optional workup of the synthesis gas product,

**characterized in that** the catalytic conversion in step (b) is effected in a reformer tube according to claim 1 at defined steam reforming conditions, in particular in terms of the steam/carbon ratio S/C and the reforming temperature, wherein the gas-contacted metallic components of the reformer tube are made of a nickel-based alloy and those gas-contacted surfaces having a temperature during operation between 650°C and 800°C, preferably between 680°C and 750°C, most preferably between 690°C and 720°C, are equipped with an aluminium diffusion layer.

10. Process according to claim 9, **characterized in that** those regions of the inner wall of the at least one heat exchanger tube having a surface temperature between 650°C and 800°C, preferably between 680°C and 750°C, most preferably between 690°C and 720°C, are equipped with an aluminium diffusion layer.

11. Process according to claim 9 or 10, **characterized in that** those surfaces of gas-contacted metallic components of the reformer tube having surface temperatures during operation under defined steam reforming conditions in the range from 800°C to 400°C, preferably from 750°C to approximately 400°C, most preferably from 720°C to approximately 400°C, are also equipped with an aluminium diffusion layer.

**12.** Process according to any of the preceding claims, **characterized in that** the inner wall of the at least one heat exchanger tube is fully equipped with an aluminium diffusion layer.

**13.** Reformer furnace comprising refractorily lined or refractorily faced walls, a ceiling and a floor and an interior formed thereby, **characterized in that** at least a one reformer tube according to claims 1 to 8 and at least one burner for heating the reformer tube are arranged in the interior or in a secondary space in fluid connection with the interior in respect of the burner flue gases.

**14.** Reformer furnace according to claim 13, **characterized in that** the at least one reformer tube is arranged in the interior in free-hanging or free-standing fashion, wherein the portion of the shell tube comprising the reaction chamber is arranged in the interior and the portion of the shell tube comprising the exit chamber is at least partially fed through the ceiling or the floor.

**15.** Reformer furnace according to any of the preceding claims, **characterized in that** a multiplicity of reformer tubes and burners are arranged in the interior such that the longitudinal axes of the flames generated by the burners are oriented parallel to the longitudinal axes of the reformer tubes.

**Revendications**

**1.** Tube de reformage pour la conversion de matières de charge contenant des hydrocarbures, de préférence du gaz naturel, en un produit de gaz de synthèse contenant des oxydes de carbone et de l'hydrogène dans des conditions de reformage à la vapeur, comprenant

(a) un tube d'enveloppe extérieur supportant la pression, dans lequel le tube d'enveloppe est séparé au moyen d'un fond de séparation en une chambre de réaction et une chambre de sortie et dans lequel la chambre de réaction peut être chauffée de l'extérieur,
(b) un amas d'un catalyseur solide, actif pour le reformage à la vapeur, disposé dans la chambre de réaction,
(c) une entrée disposée dans la région de la chambre de réaction pour le courant de gaz de charge contenant la matière de charge, dans lequel l'entrée du courant de gaz de charge est en communication fluidique avec l'amas de catalyseur,
(d) au moins un tube d'échangeur de chaleur disposé à l'intérieur de la chambre de réaction et à l'intérieur de l'amas de catalyseur, dont l'extrémité d'entrée est en communication fluidique avec l'amas de catalyseur et dont l'extrémité de sortie est en communication fluidique avec la chambre de sortie, dans lequel le courant de gaz de charge traverse, après son entrée dans la chambre de réaction, d'abord l'amas de catalyseur et ensuite à contre-courant le tube d'échangeur de chaleur et se refroidit ainsi de façon continue et dans lequel le tube d'échangeur de chaleur est en relation d'échange de chaleur avec l'amas de catalyseur et le courant de gaz de charge qui le traverse,
(e) une conduite de collecte pour le produit de gaz de synthèse, qui est en communication fluidique avec la chambre de sortie,

**caractérisé en ce que** les composants métalliques du tube de reformage touchés par le gaz se composent d'un alliage à base de nickel et les surfaces touchées par le gaz, dont la température pendant le fonctionnement dans des conditions de reformage à la vapeur déterminées se situe entre 650 et 800°C, de préférence entre 680 et 750°C, et de préférence encore entre 690 et 720°C, sont munies d'une couche de diffusion d'aluminium.

**2.** Tube de reformage selon la revendication 1, **caractérisé en ce que** les régions de la paroi intérieure dudit au moins un tube d'échangeur de chaleur, dont la température de surface se situe entre 650 et 800°C, de préférence entre 680 et 750°C, et de préférence encore entre 690 et 720°C, sont munies d'une couche de diffusion d'aluminium.

**3.** Tube de reformage selon une revendication 1 ou 2, **caractérisé en ce que** la paroi intérieure dudit au moins un tube d'échangeur de chaleur est entièrement munie d'une couche de diffusion d'aluminium.

**4.** Tube de reformage selon l'une quelconque des revendications précédentes, **caractérisé en ce que** les surfaces des composants métalliques du tube de reformage touchés par le gaz, dont les températures de surface pendant le fonctionnement dans des conditions de reformage à la vapeur déterminées se situent dans la plage de 800 à environ 400°C, de préférence de 750 à environ 400°C, et de préférence encore de 720 à environ 400°C, sont également munies d'une couche de diffusion d'aluminium.

5. Tube de reformage selon l'une quelconque des revendications précédentes, **caractérisé en ce que** ledit au moins un tube d'échangeur de chaleur se compose d'un alliage à base de nickel et est muni d'une couche de diffusion d'aluminium sur le côté intérieur et sur le côté extérieur.

6. Tube de reformage selon l'une quelconque des revendications précédentes, **caractérisé en ce que** l'on dépose sur la paroi intérieure dudit au moins un tube d'échangeur de chaleur une quantité d'aluminium telle que la concentration en aluminium dans la couche de diffusion vaut au moins 20 % en poids, de préférence au moins 30 % en poids.

7. Tube de reformage selon l'une quelconque des revendications précédentes, **caractérisé en ce que** ledit au moins un tube d'échangeur de chaleur est enroulé en hélice sur au moins une partie de sa longueur.

8. Tube de reformage selon l'une quelconque des revendications précédentes, **caractérisé en ce qu'**au moins deux tubes d'échangeur de chaleur sont disposés à l'intérieur de l'amas de catalyseur.

9. Procédé de fabrication de gaz de synthèse par reformage catalytique à la vapeur de matières de charge contenant des hydrocarbures, de préférence de gaz naturel, dans des conditions de reformage à la vapeur en présence d'un catalyseur solide actif pour le reformage à la vapeur, comprenant les étapes suivantes:

   (a) fourniture d'un courant de gaz de charge contenant la matière de charge et ajout de vapeur de reformage, dans lequel il résulte du rapport molaire de la quantité de vapeur de reformage ajoutée et du carbone présent dans la matière de charge un rapport vapeur/carbone S/C,
   (b) conversion catalytique de la matière de charge dans des conditions de reformage à la vapeur en un produit de gaz de synthèse contenant des oxydes de carbone et de l'hydrogène,
   (c) évacuation et traitement optionnel du produit de gaz de synthèse,

   **caractérisé en ce que** l'on effectue la conversion catalytique de l'étape (b) dans un tube de reformage selon la revendication 1 dans des conditions de reformage à la vapeur déterminées, en particulier en ce qui concerne le rapport vapeur/carbone S/C et la température de reformage, dans lequel les composants métalliques du tube de reformage touchés par le gaz se composent d'un alliage à base de nickel et les surfaces touchées par le gaz, dont la température pendant le fonctionnement dans des conditions de reformage à la vapeur déterminées se situe entre 650 et 800°C, de préférence entre 680 et 750°C, et de préférence encore entre 690 et 720°C, sont munies d'une couche de diffusion d'aluminium.

10. Procédé selon la revendication 9, **caractérisé en ce que** les régions de la paroi intérieure dudit au moins un tube d'échangeur de chaleur, dont la température de surface se situe entre 650 et 800°C, de préférence entre 680 et 750°C, et de préférence encore entre 690 et 720°C, sont munies d'une couche de diffusion d'aluminium.

11. Procédé selon une revendication 9 ou 10, **caractérisé en ce que** les surfaces des composants métalliques du tube de reformage touchés par le gaz, dont les températures de surface pendant le fonctionnement dans des conditions de reformage à la vapeur déterminées se situent dans la plage de 800 à environ 400°C, de préférence de 750 à environ 400°C, et de préférence encore de 720 à environ 400°C, sont également munies d'une couche de diffusion d'aluminium.

12. Procédé selon l'une quelconque des revendications précédentes, **caractérisé en ce que** la paroi intérieure dudit au moins un tube d'échangeur de chaleur est entièrement munie d'une couche de diffusion d'aluminium.

13. Four de reformage, comprenant des parois revêtues de réfractaire ou garnies de réfractaire, un plafond et un fond et un espace intérieur ainsi formé, **caractérisé en ce qu'**au moins un tube de reformage selon une revendication 1 à 8 et au moins un brûleur pour le chauffage du tube de reformage sont disposés dans l'espace intérieur ou dans un espace annexe en communication fluidique avec l'espace intérieur pour ce qui concerne les gaz de fumée du brûleur.

14. Four de reformage selon la revendication 13, **caractérisé en ce que** ledit au moins un tube de reformage est disposé de façon suspendue ou dressée dans l'espace intérieur, dans lequel la partie du tube d'enveloppe comprenant la chambre de réaction est disposée dans l'espace intérieur et la partie du tube d'enveloppe comprenant la chambre de sortie est conduite au moins en partie à travers le plafond ou à travers le fond.

15. Four de reformage selon l'une quelconque des revendications précédentes, **caractérisé en ce qu'**une multiplicité de tubes de reformage et de brûleurs sont disposés dans l'espace intérieur et **en ce que** les axes longitudinaux des flammes produites par les brûleurs sont orientés parallèlement aux axes longitudinaux des tubes de reformage.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Ullmann's Encyclopedia of Industrial Chemistry. 1998

- **A. AGÜERO et al.** Metal Dusting Protective Coatings. A Literature Review. *Oxid Met,* 2011, vol. 76, 23-42